# Europäisches Patentamt
## European Patent Office
### Office européen des brevets

(19)

(11) Veröffentlichungsnummer: **0 137 324**
**B1**

(12)

# EUROPÄISCHE PATENTSCHRIFT

(45) Veröffentlichungstag der Patentschrift: **05.09.90**

(51) Int. Cl.⁵: **G 05 B 5/01**

(21) Anmeldenummer: **84110791.5**

(22) Anmeldetag: **11.09.84**

(54) Verfahren und Vorrichtung zur Umwandlung einer elektrischen in eine dazu proportionale mechanische Stellgrösse.

(30) Priorität: 08.10.83 DE 3336629
03.03.84 DE 3407952

(43) Veröffentlichungstag der Anmeldung:
17.04.85 Patentblatt 85/16

(45) Bekanntmachung des Hinweises auf die
Patenterteilung:
05.09.90 Patentblatt 90/36

(84) Benannte Vertragsstaaten:
DE FR GB

(56) Entgegenhaltungen:
EP-A-0 075 507
FR-A-2 309 913
FR-A-2 375 651
US-A-3 979 682

(73) Patentinhaber: ROBERT BOSCH GMBH
Postfach 50
D-7000 Stuttgart 1 (DE)

(72) Erfinder: Eschrich, Gerhard, Dipl.-Ing.
Steinbeissstrasse 34
D-7016 Gerlingen (DE)
Erfinder: Juhasz, Josef, Dipl.-Ing.
Muskatellerstrasse 16
D-7143 Vaihingen/Enz (DE)
Erfinder: Schwab, Manfred, Dr. Dipl.-Phys.
Hallstattweg 1
D-7016 Gerlingen (DE)

Courier Press, Leamington Spa, England.

EP 0 137 324 B1

## Beschreibung

### Stand der Technik

Die Erfindung geht aus von einem Verfahren zur Umwandlung einer elektrischen in eine dazu proportionale mechanische Stellgröße, wie z.B. Kraft, Druck oder Weg, nach der Gattung der Ansprüche 1 bzw. 6, sowie von einer Vorrichtung zur Durchführung des Verfahrens nach der Gattung des Anspruchs 3.

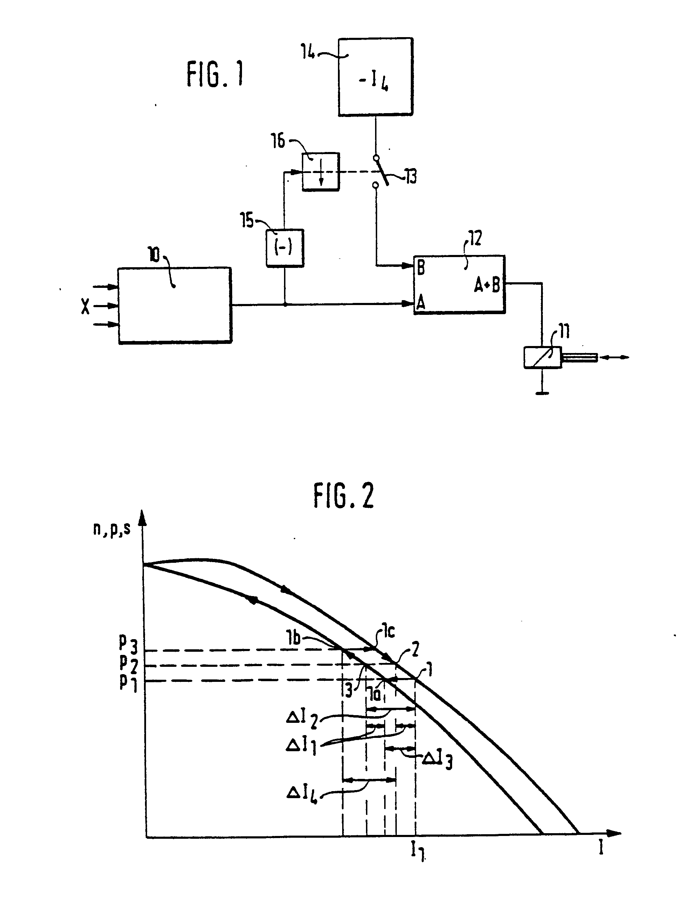

Eine solche Umwandlung erfolgt in bekannter Weise unter Verwendung von elektromagnetischen Stellgliedern. Ein solches ist beispielsweise aus der DE—OS 26 58 969 als Druckregelventil für eine Getriebesteuerung bekannt. Andere proportionale elektromagnetische Stellglieder erzeugen beispielsweise eine bestimmte Wegauslenkung gegen die Kraft einer Feder. Die Kennlinie eines solchen elektromagnetischen Stellglieds weist eine Hysterese auf, wie sie beispielsweise in Figur 2 dargestellt ist. Diese Hysterese setzt sich aus zwei Anteilen zusammen, nämlich aus der Reibungshysterese und der magnetischen Hysterese. Die Reibungshysterese kann beispielsweise durch eine niederfrequentmodulierte Ansteuerung vermindert werden, während die magnetische Hysterese durch hochwertige Stoffe auf Reineisenbasis reduziert werden kann. Diese sind jedoch teuer und schwierig zu verarbeiten. Das Vorhandsein einer solchen Hysterese, wie groß sich auch immer sein mag, erschwert die exakte Einstellung der mechanischen Stellgröße, da die Hysterese über der Kennlinie schwankt und darüber hinaus Fertigungstoleranzen und Toleranzen der verwendten Werkstoffe zu weiteren Hystereseschwankungen führen. Da somit die Hysteresebreite nicht exakt festliegt, kann bei einer Verstellung der Stellgröße gegen die Hystereserichtung ein bestimmter Punkt der Kennlinie nicht ohne weiteres angefahren werden.

Aus US—A—3 979 682 ist eine Hysterese-Kompensationseinrichtung für Steuereinrichtungen in Verbindung mit Turbinenmotoren bekannt, die eine Summiereinrichtung umfaßt. Der Summiereinrichtung werden das Steuersignal und eine Vorspannung zugeführt, deren Vorzeichen vom Vorzeichen des Steuersignals abhängt. Die Vorspannung bewirkt, daß die Amplitude der Steuereinrichtung unmittelbar von der Amplitude des Steuersignals abhängt.

Aus EP—A—0 075 507 ist eine Einrichtung mit einem hydraulischen Servoventil bekannt, bei der Mittel zum Erzielen einer idealen Steuerkurve vorgesehen sind. Die Mittel umfassen insbesondere eine programmierbare Speichereinrichtung, aus der Eingangssignalen zugeordnete Steuersignale auslesbar sind.

### Vorteile der Erfindung

Das erfindungsgemäße Verfahren nach Anspruch 1 sowie die erfindungsgemäße Vorrichtung nach Anspruch 3 haben demgegenüber den Vorteil, daß trotz möglicher Verwendung von billigen, gut verarbeitbaren Eisenwerkstoffen, wie z.B. Automatenstahl, dennoch ein sehr exaktes Anfahren eines bestimmten Kennlinienpunkts und damit die Einstellung einer mechanischen Stellgröße möglich ist, ohne daß die Hysteresebreite im einzelnen bekannt sein muß.

Das alternativ erfindungsgemäße Verfahren (Anspruch 6) hat den Vorteil, daß durch ein rekursives Näherungsverfahren eine Echtzeit-Kompensation der Hysterese erreicht wird, ohne daß Überschwinger auftreten.

Durch die in den Unteransprüchen aufgeführten Merkmale sind vorteilhafte Weiterbildungen und Verbesserungen der erfindungsgemäßen Verfahren bzw. der erfindungsgemäßen Vorrichtung möglich.

### Zeichnung

Zwei Ausführungsbeispiel der Erfindung sind in der Zeichnung dargestellt und in der nachfolgenden Beschreibung näher erläutert. Figur 1 zeigt ein Ausführungsbeispiel der Erfindung im Blockschaltbild nach der Gattung des Anspruchs 1 und Figur 2 ein Hysteresediagramm zur Erläuterung der Wirkungsweise; Figur 3 zeigt ein Blockschaltbild zur Erläuterung des Verfahrens nach den Ansprüchen 6 bis 12 und Figur 4 ein Hysteresediagramm.

### Beschreibung der Ausführungsbeispiele

In dem in Figur 1 dargestellten Ausführungsbeispiel ist eine elektronische Steuervorrichtung 10 gezeigt, die ein Steuersignal I für ein elektromagnetisches Stellglied 11 in Abhängigkeit von Eingangsparametern X erzeugt. Diese elektronische Steuervorrichtung 10 kann z.B. das Steuergerät einer elektronischen Getriebesteuerung und das elektromagnetische Stellglied der dafür notwendige Druckregler sein, der in Abhängigkeit von Eingangsparametern, bzw. der elektrischen Stellgröße I einen bestimmten Steuerdruck einstellen muß. Anstelle eines Drucks können selbstverständlich aus andere mechanische Stellgrößen, wie z.B. eine bestimmte Auslenkung (Weg) oder eine bestimmte Kraft auf ein Medium eingestellt werden.

Die elektrische Stellgröße I ist dem Stellglied 11 über eine Summiervorrichtung 12 zugeführt. Einem zweiten Eingang der Summiervorrichtung 12 ist ein fest vorgegebenes elektrisches Signal bzw. ein elektrischer Strom $-I_4$ über einen Schalter 13 zugeführt. Dieser Strom wird in einer Signalerzeugungsstufe 14 erzeugt, die z.B. als Stromquelle ausgebildet sein kann. Die Summiervorrichtung 12 kann in bekannter Weise dadurch realisiert werden, daß die beiden Ströme I und $-I_4$ über Widerstände verknüpft werden. Die elektrische Stellgröße I ist weiterhin über eine Vorzeichen-Erkennungsstufe 15 mit dem Triggereingang eines Zeitglieds 16 verbunden, durch das der Schalter 13 steuerbar ist. Durch die Vorzeichen-Erkennungsstufe 15 wird die Richtung der Veränderung der elektrischen Stellgröße I erkannt, wobei die Vorzeichen-Erkennungsstufe 15 nur dann das Zeitglied 16 triggert, wenn die Veränderung negativ ist. Dazu kann diese Vorzeichen-Erkennungsstufe 15 beispielsweise als Differenzierstufe mit nachgeschalteter Diode realisiert sein. Wird das Zeitglied 16 getriggert, so schließt der Schalter 13 für die Dauer seiner Haltezeit.

Die Wirkungsweise der dargestellten Anordnung besteht darin, daß jede gewünschte mechanische Größe, in Figur 2 als Druck p dargestellt, nur auf einer der beiden Hystereselinien eingestellt wird. Im dargestellten Fall ist dies die obere Hystereselinie. Soll der Druck verringert werden, so stellt dies kein Problem dar, da in diesem Fall durch Erhöhung des elektrischen Stellgröße ohnehin nur eine Bewegung auf der oberen Hystereselinie stattfindet. Soll der Druck dagegen erhöht werden, so findet ein Übergang auf die zweite Hystereselinie statt, dessen Abstand zur ersten Hystereslinie nicht bekannt ist. Im dargestellten Fall soll eine Erhöhung von einem Druckwert p1 auf einen Druckwert p2 erfolgen. Der vorhandene Steuerstrom am Arbeitspunkt 1 sei $I_1$. Um zu dem Druckwert p2 auf der oberen Kennlinie zu gelangen, müßte der Steuerstrom um $\Delta I_1$ verringert werden. Da diese jedoch gegen die Hystereseeinrichtung erfolgt, erfolgt ein Wechsel auf die untere Hystereselinie. Wäre die Hysteresebreite exakt bekannt, so könnte der Steuerstrom $I_1$ um $\Delta I_3$ sowie $\Delta I_1$ als 0 zusammen um $\Delta I_2$ verringert werden. Der Druck wäre dann über den Arbeitspunkt 3 auf $p_2$ eingestellt. Da jedoch der Wert $\Delta I_3$—wie eingangs bereits ausgeführt—nicht exakt bekannt ist, bzw. Schwankungen aufweist, wird beim erfindungsgemäßen Verfahren neben der Verringerung um $\Delta I_1$ kurzzeitig eine zusätzliche Verringung um $\Delta I_4$ vorgenommen. Man gelangt dabei über den Arbeitspunkt 1a zum Arbeitspunkt 1b. Nach sehr kurzer Zeit wird der Wert $\Delta I_4$ wieder weggenommen, so daß ein Übergang vom Arbeitspunkt 1b über den Arbeitspunkt 1c zum gewünschten Arbeitspunkt 2 erfolgt, der dem Druck p2 entspricht. Da sich durch zweimaligen Übergang zwischen den Hystereselinien der Hystereseabstand eliminiert, braucht dieser nicht exakt bekannt zu sein. Wesentlich ist, daß der Wert $\Delta I_4$ größer als der größte vorkommende Abstand zwischen den Hystereselinien ist.

Im Ausführungsbeispiel wird das Verfahren dadurch realisiert, daß durch die Vorzeichenerkennungsstufe 15 eine negative Veränderung des Steuerstromes I erkannt wird, worauf durch Triggerung des Zeitglieds 16 der Schalter 13 geschlossen und der Stromwert $-I_4$ in der Summiervorrichtung 12 dem um den Wert $\Delta I_1$ verringerten Steuerstrom I hinzugefügt wird, also eine zusätzliche Reduzierung des Stroms um den Wert $I_4$ erfolgt. Nach Ende der Haltezeit des Zeitglieds 16 wird der Schalter 13 wieder geöffnet und der Wert $-I_4$ wieder weggenommen. Die Haltzeit des Zeitglieds 16 wird dabei vorteilhaft so gewählt, daß der Druck selbst der durchlaufenen Schliefe nicht folgen kann, der Druckwert p3 also nicht erreicht wird, jedoch die den Hystereseeffekt eliminierenden Ummagnetisierungsprozesse ablaufen können.

Es versteht sich, daß das erfindungsgemäße Verfahren auch im entgegengesetzten Sinn auf der unteren Hystereselinie ablaufen kann. In diesem Falle ist eine Druckerhöhung direkt möglich, während eine Druckverringerung durch kurzzeitiges Hinzufügen eines positiven Stromwerts $I_4$ erfolgen kann.

Die in Figur 1 darestellten Blöcke können selbstverständlich im Steuergerät 10 mit integriert und als Mikrorechner realisiert sein.

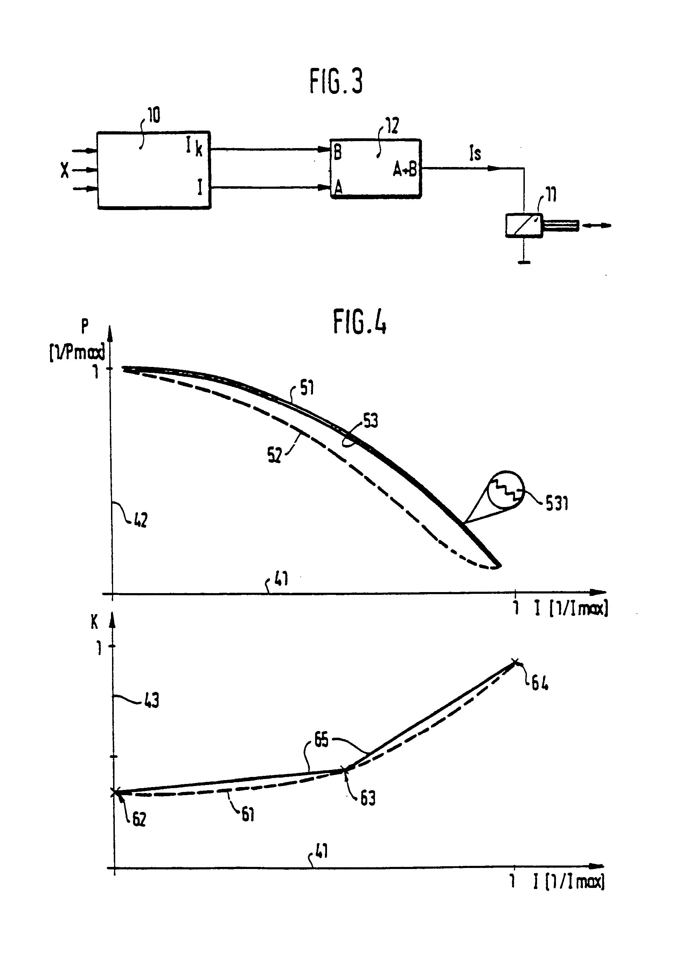

In Figur 3 ist wie in Figur 1 die Steuervorrichtung 10, das Stellglied 11 und die Summiervorrichtung 12 dargestellt. Der wesentliche Unterschied zwischen beiden Ausführungsbeispielen besteht darin, daß das Steuersignal am Eingang B der Summiervorrichtung 12 direkt von der Steuervorrichtung 10, die als Mikrorechner ausgebildet ist, ohne Umweg über zusätzliche Schaltungsmittel gebildet wird. Darüber hinaus ist dieses Steuersignal nach einem anderen Verfahren gebildet, das das gleiche Problem auf eine andere Weise löst. Wie beim vorherigen Ausführungsbeispiel läßt die Summiervorrichtung 12 eines zur Summe der Steuergrößen an den Eingängen A und B proportionalen Strom Is das Stellglied 11 fließen.

Figur 4 zeigt in der oberen Hälfte eine Strom-Druck-Kennlinie des Stellgliedes 11, die an einer P-Ordinate 42 für den Druck P über eine I-Abszisse 41 für den Strom I aufgetragen ist. Die Strom-Druck-Kennlinie weist wie beim ersten Ausführungsbeispiel eine Hysterese mit einer oberen Kennlinie 51 und einer unteren Kennlinie 52 auf. Die obere Kennlinie wird dabei mit steigendem Strom und fallendem Druck durchfahren, die untere Kennlinie bei fallendem Strom und steigendem Druck.

Das in diesem Beispiel beschriebene Verfahren basiert darauf, daß die magnetische Hysterese und damit auch die maximale Hysteresebreite aufgrund der Werkstoffparameter und entsprechender Vorbehandlung (Glühen) mit ausreichender Genauigkeit spezifiziert werden kann. Der exakte Verlauf der Magnetisierung ist jedoch von der Vorgeschichte abhängig und nur sehr kompliziert über implizite Gleichungen zu berechnen. Der Rechenaufwand für eine exakte Kompensation ist jedoch erheblich, daher wird ein geeignetes Näherungsverfahren angewendet. Daraus wird durch eine Schätzung ein Kompensationsstrom bestimmt, der die jeweilige magnetische Hysterese kompensiert, um eine eindeutige Strom-Druck-Kennlinie zu erreichen, d.h. daß zu jedem Strom unabhängig von der Vorgeschichte ein bestimmter Druck zugeordnet ist. Dazu wird aus den Strom-Druck-Kennlinien des Stellgliedes eine Kennlinie und zwar die obere, die mit steigendem Strom aufgenommen wird, als Basiskennlinie festgelegt. Durch diese Kompensation ergibt sich eine der Basiskennlinie naheliegende untere kompensierte Kennlinie 53, die bei idealer Kompensation deckungsgleich mit der Basiskennlinie ist.

Um den Aufwand möglichst gering zu halten, wird für die Kompensation der Hysteresekurven eine lineare Näherung angesetzt, d.h. ein Halbzyklus der Hysterese wird durch zwei gerade Stücke approximiert.

Weiterhin gilt die Begrenzung, daß die lineare Näherung für die Kompensation selbstverständlich nur sowiet angesetzt werden darf, wie die maximale Hysteresebreite nicht überschritten wird.

Zu jedem Punkt dieser Basiskennlinie ist eine Anfangssteigung der Magnetisierung bestimmbar, bzw. es läßt sich ein Faktor k als differentielle Abhängigkeit des Druckes vom Strom messen, d.h. der Faktor k ist proportional zur Anfangssteigung der Magnetisierung. Im Figur 4 ist in der unteren Hälfte eine K-Kennlinie 61 in Abhängigkeit vom Strom I aufgetragen.

In der Steuervorrichtung 10 wird wie beim ersten Ausführungsbeispiel in Abhängigkeit von Eingangsparametern X eine elektrische Stellgröße I eingestellt und dem Eingang A der Summiervorrichtung 12 zugeleitet. Gleichzeitig zu dieser Einstellung der elektrischen Stellgröße I läuft in einer Endlosschleife ein Algorithmus ab, der in Abhängigkeit von der elektrischen Stellgröße I eine Korrekturgröße $I_K$ berechnet. In diesem Algorithmus wird pro Schleife eine Veränderung

$$\Delta I = I(t-1) - I(t)$$

der Stellgröße I gemessen. Die Zeitvariable t ist dabei auf die Schleifendurchgangszeit des Algorithmus normiert.

In Figur 4 der unteren Hälfte ist gezeigt, daß die K-Kennlinie durch drei Punkte 62, 63, 64 und zwei Interpolationsgeraden 65 approximiert ist. Diese Interpolationsgeraden 65 sind in der Ablaufsteuerung 10 fest programmiert.

Wird innerhalb eines Zyklus des Algorithmus ein $\Delta I \neq 0$ festgestellt, so wird eine Korrekturstellgröße

$$\Delta I_K = \Delta I \cdot k(I)$$

berechnet. Es ergibt sich somit eine Korrekturgröße als Funktion der Zeit von

$$I_K(t) = I_K(t-1) + \Delta I_K \text{ mit } 0 \leq I_K \leq I_H$$

In Figur 4 ist in der oberen Hälfte eine stromkorrigierte untere Kennlinie 53 eingetragen. Eine Vergrößerung 531 zeigt die feingestufte Form der unteren Kennlinie 53, die sich durch die Zykluszeit des laufenden Kompensationsalgorithmus ergibt.

Die Korrekturgröße $I_K$ liegt in einem Bereich zwischen Null und $I_H$, wobei $I_H$ die maximale Hysteresbreite der der Strom-Druck-Kennlinie des Stellgliedes 11 ist. Die gemessene Hysteresebreite $I_H$ ist eine vom Druckreglermaterial abhängige Größe, die bei entsprechender Materialbehandlung, wie z.B. Glühen in ausreichender Näherung als konstant angenommen werden kann.

Das Verfahren nach diesen Ausführungsbeispiel hat gegenüber dem Verfahren nach dem ersten Ausführungsbeispiel den Vorteil, daß bei dieser Kompensation keine Drucküberschwinger auftreten. Das heißt, bei einer Bewegung von Punkt 1 nach Punkt 2 in Figur 2 stellt sich nach dem jetzigen Verfahren auch ein Druck von P1 nach P2 ein, ohne daß der höhere Drucke P3 als Übergangsdrück eingenommen wird.

Stelbstverständlich läßt sich nach diesem Verfahren auch die untere Hysteresekennlinie als Basiskennlinie festlegen. Im Korrekturalgorithmus müßte hierzu lediglich das Vorzeichen von $\Delta I$ geändert werden, was kein Problem innerhalb einer Software darstellt.

In weiterer Ausgestaltung der Erfindung liegt eine Verbesserung des Kompensationsalgorithmus. Insbesondere ist es dabei vorteilhaft, die lineare Näherung der Hysterese durch eine Näherung zur ersetzen, die die Krümmung der Hysteresekennlinien berücksichtigt. Das ist etwa dadurch möglich, daß anstelle der einfachen K-Kennlinie 61 in Figur 4 unten ein K-Kennfeld aufgebaut wird, das in Abhängigkeit des Abstandes zum Umkehrpunkt der elektrischen Stellgröße I, d.h. zum Anfangspunkt der momentanen Hysteresekennlinie, steht. Also gilt

$$k = k(I, \Delta I_u)$$

mit

$$\Delta I_u = |I - I_u|$$

wobei $I_u$ der Wert der Stellgröße I ist, bei dem der Algorithmus einen Vorzeichenwechsel von $\Delta I$ festgestellt hat. Durch verschiedene in einem Speicher abgelegte Stützstellen wird das K-Kennfeld interpoliert.

**Patentansprüche**

1. Verfahren zur Umwandlung einer elektrischen in eine dazu proportionale mechanische Stellgröße, wie z.B. Kraft, Druck oder Weg, unter Verwendung eines hysteresebehafteten elektromagnetischen Stellglieds mit Kompensation der Hysterese, dadurch gekennzeichnet, daß die Arbeitspunkte des elektromagnetischen Stellgliedes jeweils nur auf einer der beiden Hystereselinien der Kennlinie des elektromagnetischen Stellgliedes eingestellt werden, indem bei Veränderungen der elektrischen Stellgröße gegen die Hystereserichtung ein zusätzliches elektrisches Signal in diese Richtung für eine festgelegte Zeit hinzugefügt und danach wieder weggenommen wird, wobei dieses zusätzliche Signal größer als der größte Hystereseabstand ist.

2. Verfahren nach Anspruch 1, dadurch gekennzeichnet, daß die Zeit so festgelegt wird, daß im wesentlichen keine mechanische Veränderung (z.B. Druckwert p) stattfindet, jedoch die notwendigen Ummagnetisierungsprozesse ablaufen können.

3. Vorrichtung zur Umwandlung einer elektrischen in eine dazu proportionale mechanische Stellgröße (I), wie z.B. Kraft. Druck oder Weg mit einem hysteresebehafteten elektromagnetischen Stellglied (11) und einer Steuervorrichtung (10) zur Ansteuerung des elektromagnetischen Stellgliedes (11) und mit Mitteln zur Kompensation der Hysterese, zur Durchführung des Verfahrens nach einem der Ansprüche 1 und 2, dadurch gekennzeichnet, daß eine Signalerzeugungstufe (14) zur Erzeugung eines zusätzlichen Signals (z.B. Strom $-I_4$) sowie eine Summiervorrichtung (12) zur Aufschaltung des zusätzlichen Signals zur elektrischen Stellgröße (I) vorgesehen sind, und daß weiter ein Zeitglied (16) vorgesehen ist, das die Aufschaltung des zusätzlichen Signales zur elektrischen Stellgröße (I) während seiner Haltezeit aufrechterhält und daß zur Ansteuerung des Zeitgliedes (16) eine Vorzeichen-Erkennungsstufe (15) vorgesehen ist, die das Ausgangssignal der Steuervorrichtung (10), also die Stellgröße (I) auf eine Änderung des Vorzeichens hin überwacht und die das Zeitglied (16) dann ansteuert, wenn eine Änderung des Vorzeichens der Stellgröße (I) auftritt.

4. Vorrichtung nach Anspruch 3, dadurch gekennzeichnet, daß die Vorzeichen-Erkennungsstufe (15) als Differenzierstufe mit nachgeschalteter Diode realisiert ist.

5. Vorrichtung nach einem der Ansprüche 3 und 4, dadurch gekennzeichnet, daß zur Aufschaltung des zusätzlichen Signals ($-I_4$) zur Stellgröße (I) zwischen dem Ausgang der Signalerzeugungstufe (14) und einem Eingang (B) der Summiervorrichtung (12) ein von dem Zeitglied (16) ansteuerbarer Schalter (13) vorgesehen ist.

6. Verfahren zur Umwandlung einer elektrischen in eine dazu proportionale mechanische Stellgröße, wie z.B. Kraft, Druck oder Weg, unter Verwendung eines hysteresebehafteten elektromagnetischen Stellgliedes mit Kompensation der Hysterese, dadurch gekennzeichnet, daß die Arbeitspunkte des elektromagnetischen Stellgliedes jeweils nur auf einer der beiden Hystereselinien (51) der Kennlinie des elektromagnetischen Stellgliedes eingestellt werden, indem die Veränderung der elektrischen Stellgröße (I) gegen die Hystereserichtung ein zusätzliches elektrisches signal ($I_K$) in diese Richtung zugefügt wird, und daß das zusätzliche elektrische Signal ($I_K$) der geschätzte Hystereseabstand zum einzustellenden Arbeitspunkt des elektromagnetischen Stellgliedes ist.

7. Verfahren nach Anspruch 6, dadurch gekennzeichnet, daß das zusätzliche elektrische Signal ($I_K$) gleichzeitig neben der elektrischen Stellgröße (I) bereitgestellt wird, wobei gilt

$$\Delta I_K = \Delta I \cdot k \text{ und } 0 \leqslant I_K \leqslant I_H$$

mit

$\Delta I_K$: Änderung des zusätzlichen elektrischen Signales
$\Delta I$: Änderung der elektrischen Stellgröße
k: Korrekturfaktor in Abhängigkeit der elektrischen Stellgröße,
$I_H$: maximaler Hystereseabstand

und daß der Korrekturfaktor (k) der geschätzte Hystereseabstand pro Änderung der elektrischen Stellgröße (I) ist.

8. Verfahren nach Anspruch 7, dadurch gekennzeichnet, daß der maximale Hystereseabstand

$$I_H = I_H (I)$$

eine Funktion der elektrischen Stellgröße (I) ist.

9. Verfahren nach einem der Ansprüche 6 und 7, dadurch gekennzeichnet, daß der Korrekturfaktor

$$k = k(I)$$

eine Funktion der elektrischen Stellgröße (I) ist.

10. Verfahren nach einem der Ansprüche 6 bis 9, dadurch gekennzeichnet, daß der Korrekturfaktor

$$k = k(\Delta I_u)$$

eine Funktion des Abstandes zum Umkehrpunkt ($I_u$) der elektrischen Stellgröße (I) ist.

11. Verfahren nach einem der Ansprüche 6 bis 10, dadurch gekennzeichnet, daß der Korrekturfaktor (k) durch mindestens zwei Punkte (62, 64) der Kennlinie welcher festgelegt ist und interpoliert wird.

12. Verfahren nach Anspruch 11, dadurch gekennzeichnet, daß der Korrekturfaktor wenigstens zwischen den Punkten (62, 64) linear interpoliert wird.


**Revendications**

1. Procédé pour convertir une grandeur électrique de réglage en une grandeur mécanique de réglage,

5

EP 0 137 324 B1

telle par exemple qu'une force, une pression ou une course, proportionelle à cette grandeur électrique, en utilisant un organe électromagnétique de réglage affecté d'hystérésis, avec compensation de cette hystérésis, procédé caractérisé en ce que les points de fonctionnement de l'organe électromagnétique de réglage sont respectivement placés sur une seule des deux lignes d'hystérésis de la courbe caractéristique de l'organe électromagnétique de réglage, du fait que lors de modifications de la grandeur électrique de réglage contre le sens de l'hystérésis, un signal électrique supplémentaire est ajouté dans ce sens pendant un temps déterminé et est ensuite enlevé, ce signal étant plus grand que l'intervalle maximal d'hystérésis.

2. Procédé selon la revendication 1, caractérisé en ce que le temps est déterminé de façon qu'aucune modification mécanique (par exemple de la valeur p de la pression) n'ait essentiellement lieu, mais que les processus d'inversion magnétique nécessaires puissent se dérouler.

3. Dispositif pour convertir une grandeur électrique de réglage en une grandeur mécanique de réglage (I), telle par exemple qu'une force, une pression ou une course, proportionnelle à cette grandueur électrique, avec un organe électromagnétique de réglage (11) affecté d'hystérésis et un dispositif de commande (10) pour commander cet organe électromagnétiquement de réglage (11), et avec des moyens pour compenser l'hystérésis, pour la mise en oeuvre du procédé selon une des revendications 1 ou 2, dispositif caractérisé en ce qu'il est prévu un étage (14) de production de signaux pour produire un signal supplémentaire (par exemple courant $-I_4$), ainsi qu'un dispositif (12) de totalisation pour ajouter le signal supplémentaire à la grandeur électrique de réglage (I), et qu'il est en outre prévu un organe de temporisation (16) qui maintient l'adjonction du signal supplémentaire à la grandeur électrique de réglage (I) pendant son temps de maintien, tandis qu'il est prévu pour commander cet organe de temporisation (16) un étage (15) d'identification de signe, qui surveille le signal de sortie du dispositif de commande (10), donc la grandeur de réglage (I), en ce qui concerne un changement de signe, et qui commande alors l'organe de temporisation (16) lorsqu'un changement du signe de la grandeur de réglage (I) se produit.

4. Dispositif selon la revendication 3, caractérisé en ce que l'étage (15) d'identification de signe est un étage différenciateur avec une diode branchée à la suite.

5. Dispositif selon une des revendications 3 ou 4, caractérisé en ce que, pour ajouter le signal supplémentaire ($-I_4$) à la grandeur de réglage (I), il est prévu entre la sortie de l'étage (14) de production de signaux et une entrée (B) du dispositif (12) de totalisation, un commutateur (13) susceptible d'être commandé par l'organe de temporisation (16).

6. Procédé pour convertir une grandeur électrique de réglage en une grandeur mécanique de réglage, telle par exemple qu'une force, une pression ou une course, proportionelle à cette grandeur électrique, en utilisant un organe électromagnétique de réglage affecté d'hystérésis, avec compensation de cette hystérésis, procédé caractérisé en ce que les points de fonctionnement de l'organe électromagnétique de réglage sont respectivement placés sur une seule des deux lignes d'hysterésis (51) de la courbe caractéristique de l'organe électromagnétique de réglage, du fait que lors d'une modification de la grandeur électrique de réglage (I) contre le sens de l'hystérésis, un signal électrique ($I_k$) supplémentaire est ajouté dans ce sens, et ce signal électrique ($I_k$) supplémentaire est l'intervalle d'hystérésis estimé par rapport au point de fonctionnement à régler de l'organe électromécanique de réglage.

7. Procédé selon la revendication 6, caractérisé en ce que le signal électrique ($I_k$) supplémentaire est simultanément disponible à côté de la grandeur électrique de réglage (I), et on a:

$$\Delta I_K = \Delta I \cdot K \text{ et } 0 \leq I_K \leq I_H$$

avec:

$\Delta I_K$: modification du signal électrique supplémentaire
$\Delta I$: modification de la grandeur électrique de réglage
K: facteur de correction en fonction de la grandeur électrique de réglage,
$I_K$: intervalle maximal d'hystérésis

et le facteur de correction (k) est l'intervalle d'hystérésis estimé pour une modification de la grandeur électrique de réglage (I).

8. Procédé selon la revendication 7, caractérisé en ce que l'intervalle maximal d'hystérésis:

$$I_H = I_H(I)$$

est une fonction de la grandeur électrique de réglage (I).

9. Procédé selon une des revendications 6 ou 7, caractérisé en ce que le facteur de correction:

$$k = k(I)$$

est une fonction de la grandeur électrique de réglage (I).

10. Procédé selon une des revendications 6 à 9, caractérisé en ce que le facteur de correction:

$$k = k(\Delta I_u)$$

est une fonction de la distance au point d'inversion ($I_u$) de la grandeur électrique de réglage (I).

6

11. Procédé selon une des revendications 6 à 10, caractérisé en ce que le facteur de correction (k) est déterminé par l'intermédiaire d'au moins deux points (62, 64) de la courbe caractéristique, et est interpolé.

12. Procédé selon la revendication 11, caractérisé en ce que le facteur de correction est interpolé linéairement au moins entre les points (62, 64).

## Claims

1. Method for converting an electrical control variable into a mechanical control variable proportional to it, such as e.g. force, pressure or displacement, using an electromagnetic actuating element subject to hysteresis with compensation of the hysteresis, characterized in that the working points of the electromagnetic actuating element are in each case set to one of the two hysteresis curves of the characteristic curve of the electromagnetic actuating element, in the case of changes of the electrical control variable counter to the hysteresis direction an additional electrical signal being added in this direction for a fixed time and then taken away again, this additional signal being greater than the greatest hysteresis interval.

2. Method according to Claim 1, characterized in that the time is fixed in such a way that essentially no mechanical change (e.g. pressure value p) takes place, however the necessary demagnetization processes can occur.

3. Device for converting an electrical control variable (I) into a mechanical control variable proportional to it, such as e.g. force, pressure or displacement, having an electromagnetic actuating element (11) subject to hysteresis and a control device (10) for actuating the electromagnetic actuating element (11) and having means for compensation of the hysteresis, for executing the method according to one of Claims 1 and 2, characterized in that a signal generating stage (14) for generating an additional signal (e.g. current $-I_4$) and a summing device (12) for routing the additional signal to the electrical control variable (I) are provided, and in that further a timing element (16) is provided which maintains the routing of the additional signal to the electrical control variable (I) during its hold time and in that for actuating the timing element (16) a sign-detection stage (15) is provided which monitors the output signal of the control device (10), thus the control variable (I), for a change of the sign and which then actuates the timing element (16) if a change of the sign of the control variable (I) occurs.

4. Device according to Claim 3, characterized in that the sign-detection stage (15) is realized as a differentiating stage with diode connected downstream.

5. Device according to one of Claims 3 and 4, characterized in that, for routing the additional signal ($-I_4$) to the control variable (I) a switch (13) which can be actuated by the timing element (16) is provided between the output of the signal generating stage (14) and an input (B) of the summing device (12).

6. Device for converting an electrical control variable into a mechanical control variable proportional to it, such as e.g. force, pressure or displacement, using an electromagnetic actuating element subject to hysteresis with compensation of the hysteresis, characterized in that the working points of the electromagnetic actuating element are in each case set to only one of the two hysteresis curves (51) of the characteristic curve of the electromagnetic actuating element, in the case of change of the electrical control variable (I) counter to the hysteresis direction, an additional electrical signal ($I_K$) being added in this direction, and in that the additional electrical signal ($I_K$) is the estimated hysteresis interval to the working point, to be set, of the electromagnetic actuating element.

7. Method according to Claim 6, characterized in that the additional electrical signal ($I_K$) is made available simultaneously with the electrical control variable (I), the following applying:

$$\Delta I_k = \Delta I \cdot k \text{ and } 0 \leq I_K \leq I_H$$

where

$\Delta I_K$: change of the additional electrical signal
$\Delta I$: change of the electrical control variable
k: correction factor as a function of the electrical control variable,
$I_H$: maximum hysteresis interval
and in that the correction factor (k) is the estimated hysteresis interval per change of the electrical control variable (I).

8. Method according to Claim 7, characterized in that the maximum hysteresis interval

$$I_H = I_H \, (I)$$

is a function of the electrical control variable (I).

9. Method according to one of Claims 6 and 7, characterized in that the correction factor

$$k = k(I)$$

is a function of the electrical control variable (I).

7

10. Method according to one of Claims 6 to 9, characterized in that the correction factor

$$k=k(\Delta I_u)$$

is a function of the interval to the turning point ($I_u$) of the electrical control variable ($I$).

11. Method according to one of Claims 6 to 10, characterized in that the correction factor ($k$) is fixed and interpolated by at least two points (62, 64) of the characteristic curve.

12. Method according to Claim 11, characterized in that the correction factor is linearly interpolated at least between the points (62, 64).

8

FIG. 1

FIG. 2

# FIG.3

# FIG.4